Europäisches Patentamt

European Patent Office

Office européen des brevets

(19)

(11) Veröffentlichungsnummer: **0 195 381**
**B1**

(12)                     EUROPÄISCHE PATENTSCHRIFT

(45) Veröffentlichungstag der Patentschrift: **06.06.90**

(21) Anmeldenummer: **86103457.7**

(22) Anmeldetag: **14.03.86**

(51) Int. Cl.⁵: **H 01 B 1/12**

(54) **Verbundwerkstoff aus porösen Werkstoffen und elektrisch leitfähigen Polymeren.**

(30) Priorität: **20.03.85 DE 3510036**

(43) Veröffentlichungstag der Anmeldung:
**24.09.86 Patentblatt 86/39**

(45) Bekanntmachung des Hinweises auf die
Patenterteilung:
**06.06.90 Patentblatt 90/23**

(84) Benannte Vertragsstaaten:
**BE DE FR GB NL**

(56) Entgegenhaltungen:
**EP-A-0 152 632**

(73) Patentinhaber: **BASF Aktiengesellschaft**
**Carl-Bosch-Strasse 38**
**D-6700 Ludwigshafen (DE)**

(72) Erfinder: **Moehwald, Helmut**
**Sandwingert 53**
**D-6900 Heidelberg (DE)**

## Beschreibung

Die Erfindung betrifft einen Verbundwerkstoff aus porösen Werkstoffen und elektrisch leitfähigen Polymeren in dem die Oberflächen der Poren des porösen Werkstoffes mit Schichten aus elektrisch leitfähigen Polymeren beschichtet sind.

Nach einer Arbeit von K. C. Khulke und R. S. Mann, Journal of Polymer Science, Vol. 20 (1982), Seiten 1089 bis 1095, kann Pyrrol in wäßriger Lösung unter der Einwirkung vom Kaliumpersulfat polymerisiert werden, so daß sich das Polymerisat in Form eines feinteiligen schwarzen Pulvers abscheidet.

Aus der älteren Patentanmeldung P 33 27 012 (EP—A—84 108 455) ist ein Verfahren zur elektrochemischen Polymerisation von Pyrrol bekannt, bei dem man Pyrrol in Gegenwart von Leitsalzen in Elektrolytlösungsmitteln durch anodische Oxidation auf einer flächenförmig ausgebildeten Anode polymerisiert, wobei man als Flächenelement Stoffe mit großer Oberfläche, wie Gewebe, Gewirke, Geflechte oder Netze, bzw. poröse Stoffe, wie Polyurethanschaumstoffe und Schaumstoffe aus anderen thermoplastischen Kunststoffen mit offenen Zellen verwendet.

In der älteren europäischen Patentanmeldung 84 116 451.0 werden für die Vertragsstaaten DE, FR, GB Verbundwerkstoffe aus porösen Substratfilmen und elektrisch leitfähigen Polyanilinen bzw. —C-Alkylanilinen vorgeschlagen.

Aufgabenstellung der Erfindung ist es, Verbundwerkstoffe aus porösen Werkstoffen und elektrisch leitfähigen Polymeren zu schaffen, die bessere Eigenschaften als die bisher bekannten haben, sowie ein vorteilhaftes Verfahren zur Herstellung derartiger Verbundwerkstoffe.

Die Aufgabe der Erfindung wird durch Verbundwerkstoffe aus porösen Werkstoffen und elektrisch leitfähigen Polymeren gelöst, die dadurch gekennzeichnet sind, daß die Oberflächen der Poren zunächst mit einer Schicht aus einem elektrisch leitfähigen Polymeren beschichtet sind, das durch Behandeln der Monomeren mit einem Oxidationsmittel erhalten wurde, und darauf eine Schicht aus einem elektrisch leitfähigen Polymeren aufgebracht ist, die durch anodische Oxidation der Monomeren erhalten wurde.

Ein weiterer Gegenstand der Erfindung ist ein Verfahren zur Herstellung derartiger Verbundstoffe aus porösen Werkstoffen und elektrisch leitfähigen Polymeren. Weitere Gegenstände der Erfindung sind der detaillierten Beschreibung im folgenden zu entnehmen.

Es hat sich gezeigt, daß die Verbundwerkstoffe aus den porösen Werkstoffen gemäß der Erfindung die gleichen mechanischen Eigenschaften haben wie die Ausgangswerkstoffe, z.B. den gleichen Porositäts-Grad haben, und darüber hinaus elektrisch leitfähig sind. Bei bisherigen Versuchen zur Herstellung elektrisch leitfähiger poröser Werkstoffe sind elektrisch leitfähige feinteilige Stoffe in den Werkstoff eingelagert worden. Hierdurch kam es zu einer Veränderung der Materialeigenschaften des Werkstoffes. Dies ist bei den Werkstoffen der Erfindung, wie oben ausgeführt, nicht der Fall. Nur so können beispielsweise die erfindungsgemäßen Verbundwerkstoffe als Elektroden Verwendung finden, z.B. als Elektroden für die Elektrolyse zur Abwasserreinigung, als Katalysatorelektroden, als Batterieelektroden für primäre und sekundäre Batterien. Eine weitere Anwendung der erfindungsgemäßen Verbundwerkstoffe sind die Verwendung als ionenaustauschendes Material, als Elektrofilter sowie als antistatisches Material für Verpackungen. Weiterhin können Gehäuse, Schuhbeläge und Teppiche aus den erfindungsgemäßen Verbundwerkstoffen bestehen, die günstige antistatische Eigenschaften haben. Eine weitere Anwendung ist die EMI-Abschirmung sowie die Verwendung als Elektrofilter für die Abscheidung von Staub aus gasförmigen Substanzen.

Zur Herstellung der erfindungsgemäßen Verbundwerkstoffe können alle porösen Stoffe verwendet werden, deren Hohlräume im Werkstück mit Luft ausgefüllt sind und die offene Poren und Zellen haben, die mit der Umgebungsluft in Verbindung stehen. In Frage kommen z.B. poromere Werkstoffe wie Wirrfaservliese aus Polyamiden oder Polyestern, poröse anorganische Werkstoffe wie poröses Glas und insbesondere poröse Kunststoffe, wie schaumförmige Kunststoffe mit offenen Zellen. Besonders vorteilhaft eignen sich Polyurethan-Schaumstoffe (PUR-) mit offenen Zellen, deren Porositätsgrad über 80 % liegt. Über Polyurethan-Schaumstoffe finden sich z.B. Hinweise im Chemie-Lexikon von Römpp, 7. Auflage, Franckh'sche Verlagshandlung W. Keller und Co., Stuttgart (1975), Band 5, Seite 2774.

Die Werkstoffe können in Form von Filmen, Folien, Fasern oder beliebigen dreidimensionalen Gebilden vorliegen und zweckmäßig gibt man dem porösen Werkstoff eine Form, die der späteren Anwendung entspricht.

Zur Herstellung der Verbundwerkstoffe bringt man zunächst auf die Oberfläche der Poren des porösen Werkstoffes eine Schicht aus einem elektrisch leitfähigen Polymeren auf, die man durch Behandeln der die Polymeren bildenden Monomeren mit einem Oxidationsmittel in Gegenwart von Leitsalzen erhält. Solche Monomeren, die mittels Oxidationsmittel polymerisiert werden können, sind z.B. Verbindungen aus der Klasse der fünfgliedrigen heterocyclischen Verbindungen mit einem konjugierten π-Elektronensystem die Stickstoff, Schwefel oder Sauerstoff als Heteroatom enthalten. Beispiele dieser Verbindungen sind solche aus der Klasse der Pyrrole, der Thiophene und der Furane. Von den Pyrrolen eignen sich z.B. das unsubstituierte Pyrrol selbst, aber auch N-substituierte Pyrrole wie N-Alkylpyrrol. Es können aber auch andere substituierte Pyrrole wie 3,4-Dialkylpyrrole oder 3,4-Dichlorpyrrole Verwendung finden. Von den Verbindungen der Klasse der Thiophene eignet sich insbesondere das unsubstituierte Thiophen selbst sowie 2-oder 3-Alkylthiophene, z.B. 3-Methyl-thiophen oder 2,3-Diethylthiophen. Von den Verbindungen der Klasse der Furane kommt ebenfalls das unsubstituierte Furan in Frage, aber auch Alkylfurane wie 2-Ethyl- oder 2,3-Dimethylfuran. Diese genannten fünfgliedrigen heterocyclischen Verbindungen können aber auch zusammen mit anderen copolymerisierbaren Verbindungen, wie z.B. Thiazol, Oxazol oder Imidazol, polymerisiert werden. Es ist aber auch möglich, durch chemische Oxidationsmittel Verbindungen wie Anilin oder Benzidin polymerisieren.

Als Oxididationsmittel verwendet man zweckmäßig Sauerstoff enthaltende Oxidationsmittel, die, bezogen auf 1 Mol der zu polymerisierenden Verbindung, in Mengen von 0,2 bis 10 Molen Verwendung finden können. Größere Mengen an Oxidationsmittel sind nicht erforderlich, da die Menge ausreicht, den gesamten Ausgangsstoff in Polymere umzuwandeln. Die Polymerisation der Monomeren mittels Sauerstoff enthaltender Oxidationsmittel erfolgt zweckmäßig in Lösung, wobei sich Wasser als Lösungsmittel gegebenenfalls in Abmischung mit organischen, mit Wasser mischbaren Lösungsmitteln bewährt hat. Es können aber auch organische Lösungsmittel, wie Dimethylsulfoxid, Methanol, Acetonitril, Ethylencarbonat, Propylencarbonat, Dioxan oder Tetrahydrofuran verwendet werden. Man arbeitet zweckmäßig so, daß die Lösungen 0,1 bis 50 %, vorzugsweise 1 bis 5 Gew. %, des zu polymerisierenden Monomeren enthalten. Die Menge des zuzusetzenden Oxidationsmittels wird nach dem oben angegebenen Prinzip ermessen. Die Oxidation kann zweckmäßig bei Temperaturen zwischen -20 und 40°C erfolgen. Die Polymerisation dieser Monomeren erfolgt im allgemeinen in Gegenwart von Leitsalzen, die auch als Komplexierungsmittel oder Dotierungsmittel bezeichnet werden. Als Leitsalze haben sich z.B. $KHSO_4$, $Na_2SO_4$, HCOOH, $LiClO_4$, $HClO_4$, $NEt_4ClO_4$, $NBu_4ClO_4$, $KAlF_3$, $Na_3AlF_6$, $KBF_4$, $K_2ZrF_6$, $K_2NiF_4$, $HBF_4$, $HO_2(NO_3)_2$, $H_2SO_4$, $FeCl_3$, $NOPF_6$, $KAsF_6$ oder $NaPF_6$ bewährt. Die Konzentration der Leitsalze ist so bemessen, daß auf 3 Mol des eingesetzten Monomeren oder der Gemische der Monomeren mindestens 1 Mol der oben aufgeführten Leitsalze verwendet werden.

Zum Aufbringen der Schicht des Polymeren auf die Oberfläche des als Matrix dienenden porösen Werkstoffes geht man zweckmäßig so vor, daß man zunächst eine Lösung des Monomeren und des Leitsalzes auf die Oberfläche aufbringt und danach den Werkstoff mit einer Lösung des Sauerstoff enthaltenden Oxidationsmittels behandelt.

Von den Sauerstoff enthaltenden Oxidationsmitteln haben sich insbesondere Peroxosäuren und deren Salze, wie die peroxodischwefelsäure und deren Alkali- und Ammoniumsalze bewährt. Vorzugsweise werden auch Peroxoborate oder Peroxochromate, wie Natriumperborat oder Kaliumdichromat, verwendet. Außerdem sind Permanganate, wie Kaliumpermanganat, geeignet, wenn man diesem Permanganat geringe Mengen Säure zusetzt. Auch ist bevorzugt die Verwendung von Wasserstoffsuperoxid, wobei hier die Anwesenheit von Leitsalzen unumgänglich ist. Ebenfalls ohne Leitsalz verwendbare Oxidationsmittel sind Nitrosyl- und Nitrylsalze der allgemeinen Zusammensetzung $NO^+X^-$ und $NO_2^+X^-$ und $X^- = Cl^-$, $NO_3^-$, $BF_4^-$, $SbCl_6^-$, $HSO_4^-$.

Man wählt die Menge an Monomeren, die das leitfähige Polymere bilden so, daß etwa 0,01 bis 10 Gew. %, bezogen auf das Gewicht des porösen Werkstoffes, einer Schicht des leitfähigen Polymeren entstehen. Der derart mit einer Schicht aus elektrisch leitfähigen Polymeren überzogene bzw. beschichtete poröse Werkstoff wird nun in eine Lösung eingetaucht, die ein anodisch oxidierbares Monomeres und ein Leitsalz enthält, wobei der beschichtete poröse Werkstoff als Anode geschaltet wird und das Monomere anodisch polymerisiert wird, so daß die Polymerschicht auf die bereits vorhandene Schicht aus leitfähigen Polymeren aufwächst. Die anodisch oxidierbaren Monomeren können die gleichen wie die obigen genannten sein. Es kommen also Verbindungen aus der Klasse der Pyrrole, der Thiophene oder der Furane in Frage. Man kann aber auch Anilin, unsubstituierte Aniline sowie Diphenylamin, Triphenylamin anodisch aufpolymerisieren.

Die Konzentration des Monomeren im Lösungsmittel beträgt hierbei im allgemeinen etwa um 0,1 Mol pro Liter Lösungsmittel. Sie kann aber auch in weiten Grenzen unterschritten bzw. überschritten werden. Zweckmäßig arbeitet man mit Konzentrationen von 0,01 bis 1 Mol Monomer pro Liter Lösungsmittel. Man wählt die Menge an Monomeren so, daß 0,1 bis 100 Gew. % der zweiten Schicht, bezogen auf das Gewicht des porösen Materials, entstehen.

Als Elektrolytlösungsmittel kommen die oben genannten Lösungsmittel in Frage. Besonders geeignet sind die für die anodische Oxidation der oben genannten heterocyclischen Verbindungen üblichen polaren organischen Lösungsmittel, die die Monomeren und das Leitsalz zu lösen vermögen. Das Lösungsmittel selbst soll im Falle der fünfatomigen Heterocyclen möglichst aprotisch sein. Bevorzugt sind Alkohole, Ether, wie 1,2-Dimethoxyethan, Dioxan, Tetrahydrofuran, Aceton, Acetonitril, Dimethylformamid oder Propylencarbonat. Im Falle von Anilin kann in säurehaltigen (pH≤3) wäßrigen oder Wasser/Methanol-Elektrolyten gearbeitet worden.

Als Leitsalz können die ebenfalls für derartige anodische Oxidationen der heterocyclischen Verbindungen bzw. der anderen genannten Monomeren an sich bekannte übliche anionische oder ionisierbare Verbindungen Verwendung finden, z.B. die oben genannten Leitsalze, die bei der Oxidation der Monomeren mit Sauerstoff enthaltenden Oxidationsmitteln zugegen sein können. Geeignet sind auch Anionen von Aromaten mit sauren Gruppen, z.B. substituierte aromatische Sulfonsäuren und Polysulfonsäuren. Besonders bevorzugt sind Leitsalze, die Benzolsulfonat- oder Toluylsulfonatanionen enthalten. Die Leitsalzkonzentration ist bei dem Verfahren im allgemeinen zwischen 0,001 bis 1, vorzugsweise 0,01 bis 0,1 Mol/l Lösungsmittel.

Das Verfahren kann in einer elektrolytischen Zelle oder Elektrolyseapparatur mit einer externen Gleichstromquelle durchgeführt werden. Der mit leitfähigen Polymeren beschichtete poröse Werkstoff wird dabei als Anode geschaltet.

Die Kathode kann z.B. aus einem anderen Metall wie Platin, Molybdän, Wolfram oder aus Edelstahl, Nickel oder Titan oder Kohlenstoffmaterialien, wie Graphit, Glas-Kohlenstoff, C-Fasern, etc. bestehen.

Die Reaktionstemperatur bei der das Verfahren betrieben wird, hat sich als unkritisch erwiesen, so daß in einem breiten Bereich gearbeitet werden kann, solange die Erstarrungstemperatur bzw. die Siedetemperatur des Elektrolytlösungsmittels nicht unter- bzw. überschritten wird. Im allgemeinen hat sich als Reaktionstemperatur ein Bereich von −20 bis +40°C als vorteilhaft erwiesen, wobei man normalerweise bei Raumtemperatur (22 bis 24°C) arbeitet. Im übrigen können die bekannten, für derartige Verfahren angewandten Elektrolysebedingungen eingehalten werden. Zweckmäßig liegt die Spannung, in der die elektrochemische Polymerisation betrieben wird, im Bereich von 0 bis 3,0 Volt, gemessen gegenüber einer ges. Kalomelreferenzelektrode, vorzugsweise im Bereich von 0,5 bis 1,5 Volt. Für die Stromdichte haben sich Werte von 0,1 bis 100 mA/cm$^2$, vorzugsweise von 1 bis 10 mA/cm$^2$, als vorteilhaft erwiesen. Im allgemeinen strebt man Dicken der aufgebrachten Schicht von leitfähigen Polymeren zwischen 0,1 und 100 µm an. Die Schichtdicke ist von der Zeit der Elektrolyse abhängig. Die erhaltenen beschichteten porösen Verbundstoffe werden anschließend zum Entfernen anhaftender Lösungsmittel mit Lösungsmittel gewaschen und getrocknet. In den erfindungsgemäß hergestellten Verbundstoffen liegt das leitfähige Polymere als Komplexkation des Polymeren mit dem Gegenanion des Leitsalzes vor. Die elektrische Leitfähigkeit der Verbundwerkstoffe liegt meist im Bereiche von 10$^{-2}$ bis 10$^2$ S/cm. Die Verbundwerkstoffe finden die oben genannten Anwendungen.

Die Erfindung wird durch die nachfolgenden Beispiele näher erläutert. Die in den Beispielen angegebenen Teile und Prozente beziehen sich auf das Gewicht.

### Beispiel 1

Ein Würfel aus Polyurethanschaumstoff von 1 cm Kantenlänge, der eine Dichte von ca. 30 kg/m$^3$ aufwies und dessen Zellen zu etwa 90 % offenporig waren, wurde zunächst mit 10 Tropfen einer Lösung aus 7.14 g Benzolsulfonsäure und 5 g Pyrrol in 100 g Methanol getränkt. Der vollkommen benetzte Polyurethan-Würfel wurde danach mit 10 Tropfen einer Lösung aus 5g Na$_2$S$_2$O$_8$ in 100 g eines Gemisches aus Methanol und Wasser im Verhältnis 1:1 getränkt. Nach etwa 5 Minuten war die Polymerisation des Pyrrols abgeschlossenen. Die Zellen und die äußere Oberfläche des Würfels hatten sich mit einem Polypyrrol-Film überzogen. Der so erhaltene Verbundstoff wurde zunächst mit einem Gemisch aus Wasser und Methanol im Verhältnis 1:1 und danach mit reinem Methanol gewaschen und im Vakuum (ungefähr 1 mbar) für die Dauer von 2 Stunden getrocknet. Der so erhaltene poröse Verbundwerkstoff war elektrisch leitfähig über den gesamten Bereich (Widerstand über die Diagonale ungefähr 400 KΩ).

Der so erhaltene Verbundstoffwürfel wurde für die Dauer von 15 min in einem Ultraschallbad, das MeOH/H$_2$O oder MeOH enthielt, behandelt. Es löste sich nur ein geringer Teil des äußerlich anhaftenden Polypyrrols ab. Nach dem Trocknen wurde ein Widerstand über die Diagonale von 500 KΩ gemessen. Eine wesentliche Veränderung der elastischen Eigenschaften konnte nicht festgestellt werden.

Auch ein mehrfaches Abschrecken des erhaltenen Verbundstoffes in flüssigem Stickstoff führte nicht zu einem Verlust der Verbundeigenschaften bzw. der elektrischen Eigenschaften des Verbundstoffes.

Der so erhaltene Verbundwerkstoff wurde nun als Anode in einen Elektrolyt eingebracht, der 0,5 mol LiBF$_4$ in 1 l Propylencarbonat gelöst enthielt. Es wurde in die Lösung 2 Vol. % Pyrrol eingebracht. Als Kathode diente Pt, Ni oder ein anderes Metall oder Graphit bzw. C-Verbundwerkstoffe.

Es wurde mit einer Stromdichte von 1 mA/cm$^2$ anodisch oxidiert. Nach ca. 1 Stunde wurde abgeschaltet, die Anode mit Propylencarbonat als Lösungsmittel monomerfrei gewaschen und getrocknet.

Es wurden weiterhin 1000 % Polypyrrol, bezogen auf das Gewicht des Verbundstoffes, an die Oberfläche der Zellen aufgebracht.

### Beispiel 2

Der nach Beispiel 1 erhaltene Würfel wurde in eine Knopfzelle eingebracht, die mit einem Elektrolyt, bestehend aus Propylencarbonat und LiBF$_4$, gefüllt war. Auf den Verbundstoffwürfel wurde ein Polypropylenvlies gelegt und darauf eine Lithiumfolie. Die Folie wurde als Anode und der Verbundstoff zum Entladen als Kathode geschaltet; beim Ladevorgang wurde umgepolt. Eine so aufgebaute Zelle ließ sich elektrochemisch wieder beladen und mit nahezu 100 %iger Stromausbeute zyklisieren.

### Beispiel 3

Wie in Beispiel 1 wurde ein Polyurethanschaumstoff-Würfel mit einer Lösung aus Pyrrol und Benzolsulfonsäure in Methanol getränkt. Dann wurde der Schaumstoff für die Dauer von 1 Stunde mit Luft behandelt. Der Sauerstoff der Luft löste die Polymerisation aus, die nach etwa 1 Stunde abgeschlossen war. Anschließend wurde der erhaltene Verbundwerkstoff in eine Zelle mit pyrrolhaltigem Elektrolyten eingebracht und der Schaumstoff als Anode geschaltet; wiederum ließ sich Polypyrrol elektrochemisch auf den Verbund aufpolymerisieren.

### Beispiel 4

Ein nach Beispiel 1 oder 3 hergestellter Verbund wurde als Anode in einen Elektrolyten geschaltet, der 0,5 mol LiClO$_4$ in 1 l Propylencarbonat gelöst

enthielt. Nach Einbringen von 20 Vol. % Thiophen in diesen Elektrolyten, wurde mit einer Stromstärke von 2mA/cm² anodisch polymerisiert.

### Beispiel 5

Ein PUR-Würfel von 1 cm Kantenlänge wurde in einer Lösung von 10 Vol. % Anilin in ca. 4 M $HClO_4$ durchgewalkt, bis eine vollständige Benetzung eingetreten war. Danach wurde dieser Würfel mit einer Lösung von 5g $Na_2S_2O_8$ in 20 ml $H_2O$ erneut benetzt und durchgewalkt. Nach ca. 3 Minuten hatte sich das PUR vollständig mit grünem Polyanilin überzogen. Der Würfel wurde anschließend mit $H_2O$ solange gewaschen, bis kein Polyanilin mehr ausgewaschen wurde. Nach 3 min im Ultraschallbad (Lsg ≙ MeOH:$H_2O$=1:1) wurde der PUR-Polyanilin-Verbund mit MeOH nachgewaschen und an Luft oder im Vakuumschrank getrocknet. Anschließend wurde wie im Beispiel 1 beschrieben Pyrrol elektrochemisch aufpolymerisiert.

Ein solcher Würfel hatte nur ca. 10 % an Gewicht zugenommen und der Widerstand gemessen über die Diagonale betrug ca. 15 MΩ, der bei Kompression auf die Hälfte auf ca. 5 MΩ absank.

### Beispiel 6

Anstelle eines PUR-Schaums konnte auch eine kompakte PUR-Sohle mit einer Dichte von annähernd 1000 kg/m³ nach Beispiel 1 oder 5 mit Polypyrrol bzw. Polyanilin in einem leitfähigen Verbund verarbeitet werden. Überraschend war, daß die Sohle nicht nur oberflächenleitend war, sondern durch diese Prozedur durchgehend elektrisch leitfähig geworden war (über 1 cm Stecke~15MΩ), wobei die Masse nur um ca. 1,5 bis 2° % zugenommen hatte.

### Patentansprüche für die Vertragsstaaten: DE FR GB

1. Verbundwerkstoff aus porösen Werkstoffen und elektrisch leitfähigen Polymeren, dadurch gekennzeichnet, daß die Oberflächen der Poren zunächst mit einer Schicht aus einem elektrisch leitfähigen Polymeren beschichtet sind, das durch Behandeln der Monomeren mit einem Oxidationsmittel erhalten wurde, und darauf eine Schicht aus einem elektrisch leitfähigen Polymeren aufgebracht ist, die durch anodische Oxidation der Monomeren erhalten wurde, wobei Anilin und C-Alkyl-aniline als Monomere ausgeschlossen sind.

2. Verfahren zur Herstellung von Verbundwerkstoffen aus porösen Werkstoffen und elektrisch leitfähigen Polymeren, dadurch gekennzeichnet, daß man auf die Oberfläche der Poren des porösen Werkstoffes eine Schicht aus Monomerem, das ein elektrisch leitfähiges Polymeres zu bilden und ein Sauerstoff enthaltendes Oxidationsmittel aufbringt und Monomere polymerisiert und den so behandelten porösen Werkstoff in eine Lösung eintaucht, die ein anodisch oxidierbares Monomeres und ein Leitsalz enthält, den porösen Werkstoff als Anode schaltet und das Monomere anodisch polymerisiert, wobei Anilin und C-Alkylaniline als Monomere ausgeschlossen sind.

3. Verfahren nach Anspruch 1, dadurch gekennzeichnet, daß man eine Verbindung aus der Klasse der Pyrrole oder der Thiophene mit einem Oxidationsmittel behandelt.

4. Verfahren nach Anspruch 1, dadurch gekennzeichnet, daß man eine Verbindung aus der Klasse der Pyrrole oder der Thiophene anodisch oxidiert.

5. Verfahren nach Anspruch 1, dadurch gekennzeichnet, daß man offenzellige Polyurethan-Schaumstoffe als porösen Werkstoff verwendet.

6. Verwendung der Verbundwerkstoffe nach Anspruch 1 als Elektroden.

### Patentansprüche für die Vertraagsstaaten: BE NL

1. Verbundwerkstoff aus porösen Werkstoffen und elektrisch leitfähigen Polymeren, dadurch gekennzeichnet, daß die Oberflächen der Poren zunächst mit einer Schicht aus einem elektrisch leitfähigen Polymeren beschichtet sind, das durch Behandeln der Monomeren mit einem Oxidationsmittel erhalten wurde, und darauf eine Schicht aus einem elektrisch leitfähigen Polymeren aufgebracht ist, die durch anodische Oxidation der Monomeren erhalten wurde.

2. Verfahren zur Herstellung von Verbundwerkstoffen aus porösen Werkstoffen und elektrisch leitfähigen Polymeren, dadurch gekennzeichnet, daß man auf die Oberfläche der Poren des porösen Werkstoffes eine Schicht aus Monomerem, das ein elektrisch leitfähiges Polymeres zu bilden vermag und ein Sauerstoff enthaltendes Oxidationsmittel aufbringt und das Monomere polymerisiert und den so behandelten porösen Werkstoff in eine Lösung eintaucht, die ein anodisch oxidierbares Monomeres und ein Leitsalz enthält, den porösen Werkstoff als Anode schaltet und das Monomere anodisch polymerisiert.

3. Verfahren nach Anspruch 1, dadurch gekennzeichnet, daß man eine Verbindung aus der Klasse der Pyrrole oder der Thiophene oder Aniline mit einem Oxidationsmittel behandelt.

4. Verfahren nach Anspruch 1, dadurch gekennzeichnet, daß man eine Verbindung aus der Klasse der Pyrrole oder der Thiophene oder der Aniline anodisch oxidiert.

5. Verfahren nach Anspruch 1, dadurch gekennzeichnet, daß man offenzellige Polyurethan-Schaumstoffe als porösen Werkstoff verwendet.

6. Verwendung der Verbundwerkstoffe nach Anspruch 1 als Elektroden.

### Revendications pour les Etats contractants: DE FR GB

1. Matériau composite à base de matières poreuses et de polymères électriquement conducteurs, caractérisé en ce que les surfaces des pores sont d'abord couvertes d'une couche d'un polymère électriquement conducteur qui a été obtenu par traitement des monomères par un oxydant, et en ce qu'il est ensuite appliqué une couche d'un polymère électriquement conducteur qui a été obtenu par oxydation anodique des monomères, l'aniline et les C-alkylamines étant exclues en tant que monomeres.

2. Procédé de préparation de matériaux composites à base de matières poreuses et de polymères électriquement conducteurs, caractérisé en ce qu'on applique, sur la surface des pores de la matière poreuse, une couche de monomère qui est capable de former un polymère électriquement conducteur et un oxydant contenant de l'oxygène, on polymérise le monomère, on plonge la matière poreuse ainsi traitée dans une solution qui contient un monomère susceptible d'oxydation anodique et un sel conducteur, on branche la matière poreuse en tant qu'anode et on polymérise anodiquement le monomère, l'aniline et les C-alkylamines étant exclues en tant que monomeres.

3. Procédé selon la revendication 2, caractérisé en ce qu'on traite par un oxydant un composé de la catégorie des pyrroles ou des thiophènes.

4. Procédé selon la revendication 2, caractérisé en ce qu'on oxyde anodiquement un composé de la catégorie des pyrroles ou des thiophènes.

5. Procédé selon la revendication 2, caractérisé en ce qu'on utilise, comme matière poreuse, des mousses de polyuréthane à alvéoles ouverts.

6. Utilisation des matériaux composites selon la revendication 1 comme électrodes.

**Revendications pour les Etats contractants: BE NL**

1. Matériau composite à base de matières poreuses et de polymères électriquement conducteurs, caractérisé en ce que les surfaces des pores sont d'abord couvertes d'une couche d'une polymère électriquement conducteur qui a été obtenu par traitement des monomères par un oxydant, et en ce qu'il est ensuite appliqué une couche d'un polymère électriquement conducteur qui à été obtenu par oxydation anodique des monomères.

2. Procédé de préparation de matériaux composites à base de matières poreuses et de polymères électriquement conducteurs, caractérisé en ce qu'on applique, sur la surface des pores de la matière poreuse, une couche de monomère qui est capable de former un polymère électriquement conducteur et un oxydant contenant de l'oxygène, on polymérise le monomère, on plonge la matière poreuse ainsi traitée dans une solution qui contient un monomère susceptible d'oxydation anodique et un sel conducteur, on branche la matière poreuse en tant qu'anode et on polymérise anodiquement le monomère.

3. Procédé selon la revendication 2, caractérisé en ce qu'on traite par un oxydant un composé de la catégorie des pyrroles, des thiophènes ou des anilines.

4. Procédé selon la revendication 2, caractérisé en ce qu'on oxyde anodiquement un composé de la catégorie des pyrroles, des thiophènes ou des anilines.

5. Procédé selon la revendication 2, caractérisé en ce qu'on utilise, comme matière poreuse, des mousses de polyuréthane à alvéoles ouverts.

6. Utilisation des matériaux composites selon la revendication 1 comme électrodes.

**Claims for the Contracting States: DE FR GB**

1. A composite material consisting of a porous material and electrically conductive polymers, wherein the surfaces of the pores are first coated with a layer of an electrically conductive polymer obtained by treating the monomers with an oxidizing agent, and a layer of an electrically conductive polymer obtained by anodic oxidation of the monomers is applied on top of this, aniline and C-alkylanilines being excluded as monomers.

2. A process for the preparation of a composite material consisting of a porous material and electrically conductive polymers, wherein a layer of a monomer, which is capable of forming an electrically conductive polymer, and an oxygen-containing oxidizing agent are applied onto the surface of the pores of the porous material, the monomer is polymerized, the porous material treated in this manner is immersed in a solution which contains an anodically oxidizable monomer and a conductive salt, the porous material is made the anode, and the monomer is anodically polymerized, aniline and C-alkylanilines being excluded as monomers.

3. A process as claimed in claim 2, wherein a compound from the class consisting of the pyrroles or of the thiophenes is treated with an oxidizing agent.

4. A process as claimed in claim 2, wherein a compound from the class consisting of the pyrroles or of the thiophenes is subjected to anodic oxidation.

5. A process as claimed in claim 2, wherein an open-cell polyurethane foam is used as the porous material.

6. The use of the composite material as claimed in claim 1 as an electrode.

**Claims for the Contracting States: BE NL**

1. A composite material consisting of a porous material and electrically conductive polymers, wherein the surfaces of the pores are first coated with a layer of an electrically conductive polymer obtained by treating the monomers with an oxidizing agent, and a layer of an electrically conductive polymer obtained by anodic oxidation of the monomers is applied on top of this.

2. A process for the preparation of a composite material consisting of a porous material and electrically conductive polymers, wherein a layer of a monomer, which is capable of forming an electrically conductive polymer, and an oxygen-containing oxidizing agent are applied onto the surface of the pores of the porous material, the monomer is polymerized, the porous material treated in this manner is immersed in a solution which contains an anodically oxidizable monomer and a conductive salt, the porous material is made the anode, and the monomer is anodically polymerized.

3. A process as claimed in claim 2, wherein a compound from the class consisting of the pyrroles or of the thiophenes or of the anilines is treated with an oxidizing agent.

4. A process as claimed in claim 2, wherein a compound from the class consisting of the pyrroles or of the thiophenes or of the anilines is subjected to anodic oxidation.

5. A process as claimed in claim 2, wherein an open-cell polyurethane foam is used as the porous material.

6. The use of the composite material as claimed in claim 1 as an electrode.